(19) **Europäisches Patentamt**
**European Patent Office**
**Office européen des brevets**

(11) **EP 2 227 749 B1**

(12) **EUROPEAN PATENT SPECIFICATION**

(45) Date of publication and mention
of the grant of the patent:
**27.08.2014 Bulletin 2014/35**

(51) Int Cl.:
***G06F 15/78*** *(2006.01)*

(21) Application number: **08856957.9**

(22) Date of filing: **07.12.2008**

(86) International application number:
**PCT/IL2008/001589**

(87) International publication number:
**WO 2009/072134 (11.06.2009 Gazette 2009/24)**

(54) **BUS ENHANCED NETWORK ON CHIP**

BUSERWEITERTES NETZWERK AUF CHIP

RÉSEAU SUR PUCE AMÉLIORÉ PAR BUS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **06.12.2007 US 992871 P**

(43) Date of publication of application:
**15.09.2010 Bulletin 2010/37**

(73) Proprietor: **Technion Research & Development Foundation Ltd.**
**32000 Haifa (IL)**

(72) Inventors:
• **CIDON, Israel**
**34762 Haifa (IL)**
• **KOLODNY, Avinoam**
**32448 Haifa (IL)**
• **WALTER, (Zigmond) Isask'har**
**26273 Kiryat Haim (IL)**

(74) Representative: **Modiano, Micaela Nadia et al**
**Modiano & Partners**
**Thierschstrasse 11**
**80538 München (DE)**

(56) References cited:
**WO-A-02/12999        WO-A-2005/093590**
**US-A1- 2006 239 392**

• **RADULESCU A ET AL: "COMMUNICATION SERVICES FOR NETWORKS ON CHIP" PROCEEDINGS OF THE INTERNATIONAL WORKSHOP ON SYSTEMS,ARCHITECTURES, MODELING AND SIMULATION. SAMOS, XX, XX, vol. 2, 1 January 2002 (2002-01-01), pages 275-299, XP001206391**
• **WIKLUND D ET AL: "SoCBUS: switched network on chip for hard real time embedded systems" PARALLEL AND DISTRIBUTED PROCESSING SYMPOSIUM, 2003. PROCEEDINGS. INTE RNATIONAL APRIL 22-26, 2003, PISCATAWAY, NJ, USA,IEEE, 22 April 2003 (2003-04-22), pages 78-85, XP010645609 ISBN: 978-0-7695-1926-5**

## Description

### Field of the invention

This application relates to integrated circuits and systems, their structure and methods and especially to a system that include a network on chip.

### Background of the invention

Recent research has shown that Network on-chip (NoC) is superior to a bus in terms of power and area for given traffic throughput requirements. Consequently, network on chip is expected to be the main interconnect infrastructure in future System on Chip (SoC) and chip multi-processor (CMP). Unlike off-chip networks, Very Large Scale Integration (VLSI) modules are only a few millimeters apart, hence the cost of off-network communication among the system modules is quite low. Such off-network communication can circumvent weaknesses of the network on chip, such as latency of critical signals, complexity and cost of broadcast operations, and operations requiring global knowledge or central control.

Some network of chips are illustrated in the following documents.

The document US2006/239392 discloses a system-on-a-chip which includes a plurality of synchronous modules with clock domain converters. Each clock domain converter is coupled to a crossbar and a loopback_enable signal line.

The document "COMMUNICATION SERVICES FOR NETWORKS ON CHIP" by RADULESCU A; GOOSSENS K from the 2002 PROCEEDINGS OF THE INTERNATIONAL WORKSHOP ON SYSTEMS, ARCHITECTURES, MODELING AND SIMULATION in SAMOS discusses networks on chip and on-chip buses.

### Summary

The invention is a system as defined in claim 1 and a method as defined in claim 15.

Preferred embodiments are defined in the dependent claims.

### Brief description of the drawings

Figure 1 illustrates a system according to an embodiment of the invention;

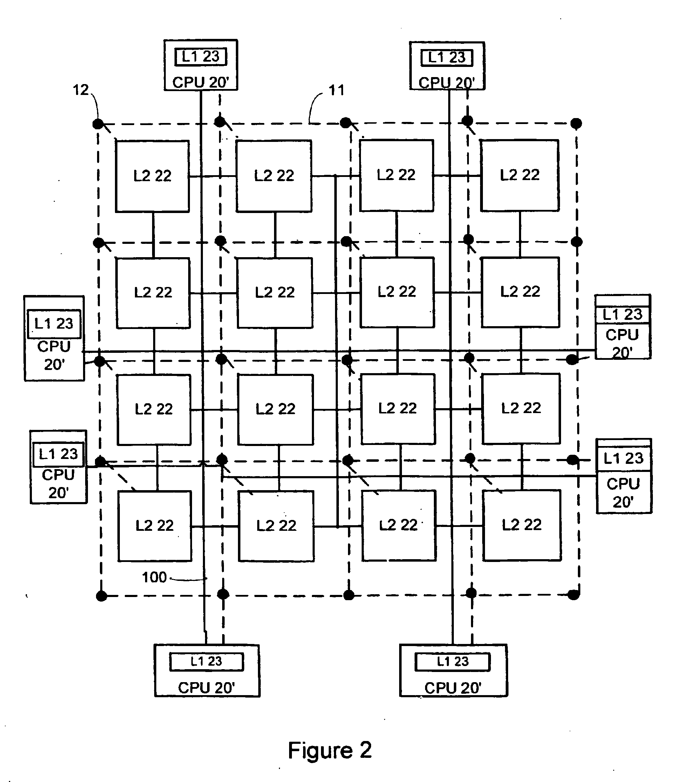

Figure 2 illustrates a system according to an embodiment of the invention;

Figure 3 illustrates an energy consumption according to an embodiment of the invention;

Figure 4 presents the decrease in the line fill transaction time in BENoC relative to the average duration of the same transactions in a standard network on chip system, for various network-to-bus speed ratios, according to an embodiment of the invention;

Figure 5 illustrates a bus according to an embodiment of the invention;

Figure 6 illustrates a bus and a masking operation according to an embodiment of the invention;

Figure 7 illustrates a bus station according to an embodiment of the invention;

Figure 8 illustrates an arbitration circuit according to an embodiment of the invention;

Figure 9 presents a scheme of a dual port data switch according to an embodiment of the invention;

Figure 10 illustrates a root according to an embodiment of the invention;

Figure 11 illustrates a mask logic according to an embodiment of the invention;

Figure 12 illustrates a state machine that according to an embodiment of the invention;

Figure 13 is a timing diagram according to an embodiment of the invention; and

Figure 14 illustrates a method for transferring information within an integrated circuit according to an embodiment of the invention.

### Detailed description of the drawings

In the following specification, the invention will be described with reference to specific examples of embodiments of the invention. It will, however, be evident that various modifications and changes may be made therein without departing from the broader spirit and scope of the invention as set forth in the appended claims.

Because the apparatus implementing the present invention is, for the most part, composed of electronic modules and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

The combination of a bus and a network on chip that are connected in parallel to multiple modules of an integrated circuit wherein the latency of the bus is lower and more predictable than the latency of the network on chip is referred to as bus enhanced network on chip or "BENoC". The parallel connectivity allows a module to transmit information to another module either via the network on chip or the bus.

The term broadcast means transmitting information to all destination modules. The term multicast means transmitting information to a sub set of all destination modules. The term convergecast includes a first step a multicast to a group of destination modules and a second step of aggregating positive and negative responses from these modules

There is a large body of work advocating the use of spatial reused networks as the main on-chip interconnection infrastructure.

Network architecture has been shown to be more cost effective than a system bus in terms of area, power and performance. In addition, networks generally have good scalability properties, while shared busses cannot withstand the increasing bandwidth and performance requirements already seen in contemporary systems.

Consequently, current state-of-the-art VLSI research often presents network on chip as the practical choice for future systems. However, conventional interconnect architectures which solely rely on a network have several drawbacks when advanced services are required. In particular, the distributed nature of a network is an obstacle when global knowledge or operation is beneficial. For example, broadcast (sending information to all modules on the chip) is an inherent operation in busses and has no extra cost. However, in a typical NoC a broadcast capability either involves additional hardware mechanisms or a massive duplication of unicast messages.

Broadcast is particularly expensive in NoCs that employ wormhole switching as classic wormhole does not support broadcast due to the complexity of the backpressure mechanism and the requirement for small buffers. Similarly, multicast is considerably easier to implement in busses than in typical networks. Finally, multi-hop networks impose inherent packet propagation latency for the communication between modules. This complicates the design of critical signals between remote modules.

Bus properties are also valuable when global knowledge and control are useful. As current network on chip implementations are strictly distributed (heavily borrowing concepts from traditional large scale networks), the system behavior and performance is often dictated by multiple local decisions. For example, arbitration for scarce resources is typically conducted using only local knowledge. Since a bus is inherently shared by many agents allowing them to simultaneously monitor its activity, it can be used to maintain a global view of the system status and as mean for achieving a global decision.

Unlike off-chip architectures, modules within a chip are placed in close proximity to each other. This enables off-network communication solutions that are not feasible in large scale networks, e.g., network on chip reconfiguration, network search and arbitration for a hot-module. These specialized operations can be performed over an off-network shared bus, at a low latency and low dissipation of power.

Consequently, a method and device are proposed. The device includes a combination of bus and system on network and the method includes utilizing a bus and a network on chip. The combination of bus and network on chip is referred to as BENoC (Bus-Enhanced Network on Chip). The network on chip is a high performance distributed network, and the bus is complementary low latency, low bandwidth bus.

The bus, which is optimized for system-wide distribution of signals and can be centrally arbitrated, is used for low-latency communication and large scale distribution of meta-data in a simple and efficient manner, while the network on chip is used for high-throughput point-to-point communication between modules.

As a result, the proposed combination is superior to a conventional network on chip. This application presents several scenarios in which the bus-network hybrid is more cost effective than a pure network implementation. Moreover, we also demonstrate that the bus can be equipped with additional simple mechanisms that further facilitate common distributed tasks.

The observation that busses are superior to networks for providing low-latency for low bandwidth signals has already inspired several proposals of bus-network on chip hybrids. Typically, such hybrid solutions employ clusters of modules where each cluster shares a local bus. While intra-cluster communication uses the local bus, inter-cluster traffic uses the network So unlike BENoC, in previous proposals, busses are used as a local network on chip alternatives (but only within a cluster), and support the same semantics while not offering additional functionality. A bus-network on chip hybrid for a uniprocessor system was suggested. There, the low-latency nature of the bus is used to accelerate the access to an array of distributed cache banks. By replacing groups of adjacent links and routers with fast bus segments, the hop count is reduced and the system performance is improved. In contrast with these approaches, BENoC does not employ the bus as an additional hierarchy layer in the interconnect fabric or an extension of the network but rather as a synergetic module operating in parallel with the network at each network endpoint, improving traditional functionality and offering new services.

A salient feature of on-chip systems is the proximity of all modules within a distance of several millimeters, which enables low-latency communication among them. This is in contrast with macro networks, where link delays are inherently dominant in the system. Therefore, traditional networks usually cannot benefit from out-of-band communication and they use their standard links for all operations, while network on chips can leverage a side-bus to enhance system functionality.

The bus-enhanced network on chip architecture described in this patent application suggests combining a bus with a network on chip for getting a best of breed communication infrastructure. The bus can circumvent some weaknesses of the network on chip, such as latency of critical signals, complexity and cost of broadcast operations, and operations requiring global knowledge or central control. It is used to support the network in specialized operations and services, such as broadcast, anycast and convergecast, which are essential for common operations such as cache line search and cache invalidation. The bus can also be used point-to-point to support low-latency critical signals with a small number of bits. BENoC is superior to classical network on chip in terms of delay and power.

Our approximate analysis shows that BENoC advantage over network on chip starts at relatively small system size around 10-20 modules, and becomes very significant as system size grows.

In conclusion, the scalability requirements of future SoCs can be served by a network on chip providing high throughput and parallelism for massive data transfer, enhanced by an integral -bus providing low-latency and broadcast capabilities for control operations and specialized services, in BENoC architecture.

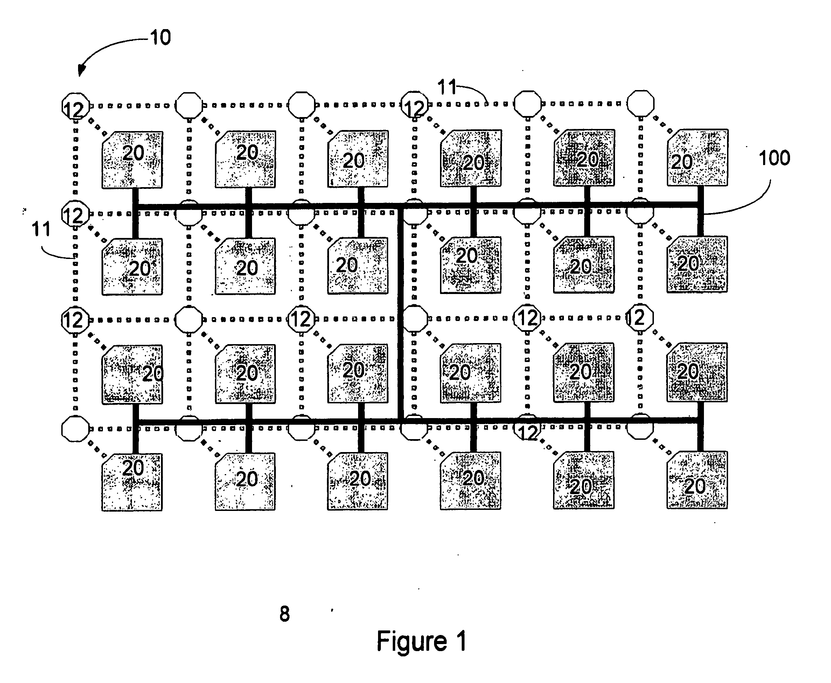

Figure 1 illustrates system 8 according to an embodiment of the invention.

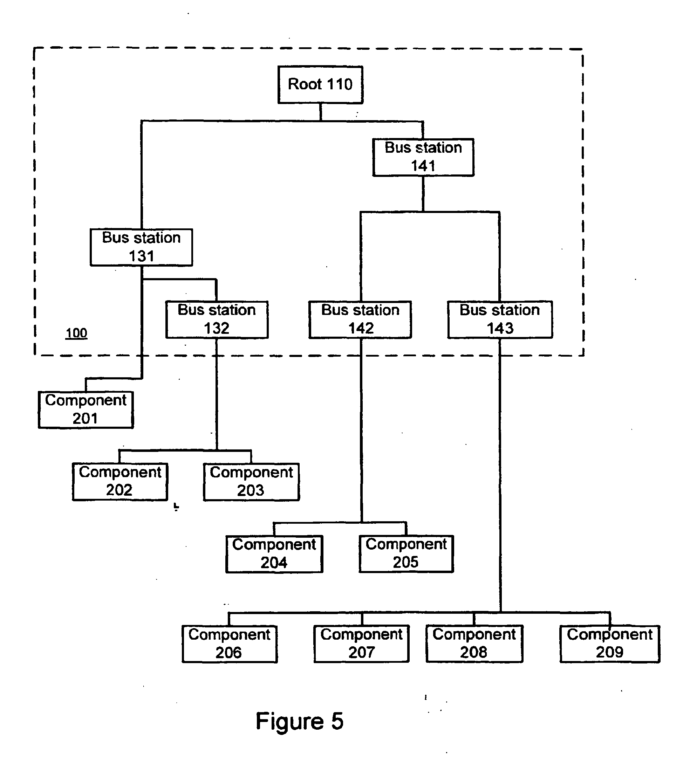

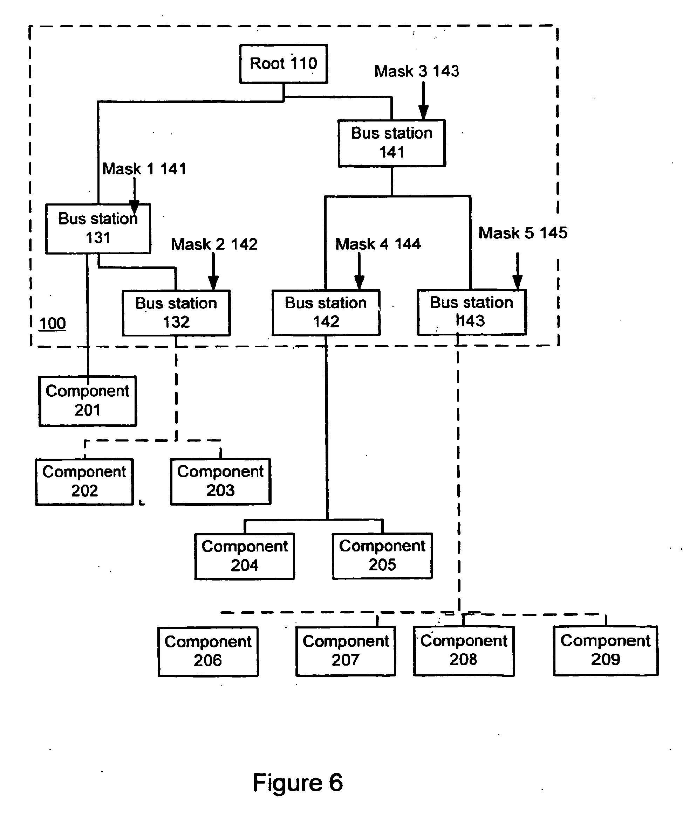

System 8 includes multiple modules (of an integrated circuit) that communicate with each other over bus 100 and network on chip 10. Network on chip 10 includes multiple end points 13 that are connected to modules 20. It is noted that the number of modules can differ from the twenty four modules of figure 1. It is further noted that bus 100 is illustrated as a simple grid for simplicity of explanation. Bus 100 includes data lines, control lines, address lines or a combination thereof as well as circuits that manage the transfer of information over the bus. These circuits can include a root and bus stations, as illustrated, for example, in figures 5 and 6.

Each one of bus 100 and network on chip 10 are connected (in a parallel manner) to multiple modules 20. Each module 20 can convey information via bus 100 of network on chip 10. Modules 20 can be processors, general purpose processors, memory banks, digital signal processors, cores, controllers, and the like.

The parallelism implies that a module can communicate with another module via bus 100 or via network on chip 10. Bus 10 is global in the sense that is connected to multiple modules that are connected to end points of network on chip 10 and is not limited to connecting between local clusters of network on chip 10.

Referring to figure 1, network on chip 10 includes nodes 12 and links 11. Bus 100 of figure 1 is a single segment bus that spans through all system modules while the data network is organized in a mesh topology. A dotted line marks network links while a solid one represents bus 100.

Each module 20 includes an interface 21 capable of determining whether to transmit information over network on chip 10 or bus 100. The determination is responsive to transmission rules that indicate when to user bus 100 and when to use network on chip 10.

### BENoC Built-in Services

Network on chip 10 can be a packet switched network such as but not limited to AEthereal, QNoC, XPipes or Hermes. Network on chip 10 takes care of point-to-point massive data transfers.

Bus 100 can concurrently function as a low latency broadcast/multicast capable media. Bus 100 is used for transfer of information for various purposes including but not limited to network on chip subsystem control, propagation of critical signals and special services.

### BENoC for short latency signaling

In typical network on chip-based systems, packets that traverse a path of multiple hops suffer from high latency, due the routing delay accumulated along its way. This latency is often unacceptable for short but urgent signaling messages required for the timely operation of the system, and is considered as one of the network on chip's main obstacles that discourage architects from an early adoption a network on chip-based architecture. Bus 100, which is designed for low bandwidth and optimized for short latency, offers a valuable alternative: such urgent messages may be sent over bus 100, traversing only a single (or few) arbitration stages. This enables quick delivery of time critical signals (e.g., interrupts, semaphore lock operations) between modules. The arbitration can be conducted by a root and additionally or alternatively by bus stations as illustrated below.

### BENoC multicast services

The combination of bus 100 and network on chip 10 enables efficient implementation of communication services common in large distributed System on Chips. For example, a high performance ASIC or FPGA may include multiple resources with the same functionality distributed in different locations across the chip (e.g., DSP processors, ALUs, multipliers, memory banks, etc.). Instead of performing a complex computation locally, a module such as a processor may complete its task in a more efficient manner by sending the data to be processed to one (or more) of these specialized resources (modules). Note that in such cases, the processor does not know which of these resources are idle, so in a basic network on chip-system it can only probe them using the network. For such cases, the system and method can easily provide an *anycast* service: In such an operation, the origin processor (module) targets any module that owns a certain type of resource and fulfills certain conditions. For instance, in the above scenario, the processor may initiate a bus transaction destined at "any idle multiplier". In response, idling multipliers may arbitrate for bus 100 in order to send back their identity or use the network to do so. Note that in this scenario bus 100 is only used for control messages and metadata, while the data itself is delivered point-to-point over network.

Bus 100 can also support a *convergecast* mechanism that facilitates the efficient collection of acknowledgements or negative result back to the initiator. Such a mechanism may use a daisy-chain circuit along bus 100 route to feedback back to the origin the identity of the available resource or the complete lack of such a free resource.

As mentioned above, bus 100 implements certain communication services in a better cost effective manner. The most basic service is a broadcast operation: In order to deliver a message from one source to multiple destinations in a basic network on chip, the sender has to generate multiple unicast messages. In addition to an increased latency, this process is energy consuming, as the same information is repeatedly transmitted over the same lines. While the network on chip routers may include a built-in broadcast mechanism, this extra hardware cannot match the simplicity, low-cost and short latency of the proposed bus.

## BENoC for CMP Cache

A broadcast operation is extremely valuable in shared memory CMP systems. Typically, multiple processors each of these processors is equipped with a local (first level - L1) cache and they all share a distributed (second level- L2) cache. Figure 1 illustrates a CMP System The system includes eight processor cores (CPUs) 20' and sixteen L2 cache banks (L2 22). Each L2 bank is divided into 4 sub-banks. CPUs 20' are connected to L2 cache banks 22 via network on chip (that includes nodes 12 and links 11) as well as by bus 100.

In order to facilitate cache coherency, the system should provide a mechanism that prevents applications from reading stale data. More specifically, when a processor issues a read exclusive (i.e., read for ownership) command to one of the L2 caches, all other processors holding a copy of that cache line should invalidate their local copy, as it no longer reflects the most updated data. Such invalidation signal is best propagated using a broadcast/multicast service.

As wire latency becomes a dominant factor, the L1 miss penalty is heavily affected by the distance between the processor and the L2 cache bank holding the fetched line. This observation gave rise to the DNUCA (Dynamic Non-Uniform Cache Architecture) approach: instead of having a few statically allocated possible L2 locations, cache lines are moved towards processors that access them. Ideally, all cache lines that are accessed by a certain processor reside in nearby L2 cache banks.

There are several issues to resolve in order to make DNUCA a practical cache management scheme. Examples are finding an efficient line migration policy, handling lines that are accessed by multiple, distant processors and cache line migration schemes. Another major difficulty in implementing DNUCA is the need to lookup cache lines: whenever a processor needs to conduct a line fill transaction (fetch a line into its L1 cache), it needs to determine its location, i.e., the identity of the L2 cache bank/processor storing its updated copy.

As described above, in a network-based interconnect, the line can be looked for using multiple unicast messages. BENoC offers a much more efficient alternative: low latency bus 100 can be used to broadcast the query to all cache banks. The particular cache storing the line can acknowledge receiving the request on the auxiliary bus and simultaneously send the line's content over the network on chip. As queries are composed of small meta-data (the initiating processor's ID and the line's address), they do not create substantial load on the auxiliary bus.

The proposed scheme has two main advantages: First, it reduces the power consumption of the system interconnect as the single bus transaction performs the broadcast operation, instead of multiple messages in the network on chip. Second, as the time-critical line search is performed over a single-hop medium instead of competing for shared network resources, the system performance is improved.

## BENoC for system management

Bus 100 can also facilitate the configuration and management of the network on chip itself. For example, when changing the system's operation mode, the network resources may need to be re-configured. Such configuration may include updating routing tables, adjusting link speeds or turning some of them completely off and remapping the system modules address space. Interestingly, although these operations are not performed during the normal run-time of the system, they should be handled with care: Since the configuration of different network resources is performed independently, they may interfere with each other. For example, if a configuration packet turns off a certain link (or a router), other configuration messages may not be able to reach their destination due to "broken paths". Similarly, trying to update routing table while the network is being used to deliver other configuration messages is problematic. Alternatively, configuration can be done using the bus. As a result, the configuration process becomes simpler to design and implement. In fact, special side-band signals are often implemented in bus-based interconnect to ease bootstrap configuration of the system (e.g., PCI bus, Power PC's DCR bus).

It may also be desirable to completely shut off parts of the network on chip when they are not expected to be used for a long time in order to save power. However, a major complication in the implementation of such a mechanism is caused by the inability to switch on inactive units fast enough when they are needed, as the "wakeup" packets cannot traverse though sleeping links or routers. Using bus 100, units that were switched off can be awakened in a simple, fast and direct manner. Moreover, bus 100 can be used to handle the communication between the modules during the network on chip initialization and power-up time.

**Analysis of power consumption**

In this section an energy required for broadcasting is provided. A comparison is made between network on chip broadcast and bus broadcast. For simplicity, it is assumed the network on chip has a regular mesh topology. The following notation is used : n = The number of modules in the system; $\Delta V$ = Voltage swing [V]; $C_0$ = Global wire capacitance per unit of length [F/mm]; P = Tile size [mm]; $C_{ld}$ = network on chip link driver input capacitance [F]; $C_{bd}$ = Bus driver input capacitance [F]; $C_{min}$ = Minimal inverter input capacitance [F];

The time needed for a driver to charge a capacitor is modeled using the following equation:

$$T = \frac{\tau}{C_{in}} C_{load} + \tau \qquad (1)$$

where $C_{in}$ is the driving buffer's input capacitance and $C_{load}$ is the load's capacitance.

The constant $\tau$ is determined by the technology.

$$\tau \square R_{min} C_{min} \qquad (2)$$

where $R_{min}$ and $C_{min}$ are the effective resistance and the input capacitance of a minimal inverter.

The energy required to charge $C_{load}$ is

$$E = \Delta V^2 \cdot C_{load} \cdot \qquad (3)$$

First, an approximation if provided of the latency and energy of a broadcast transaction in a network on chip-based system which relies on multiple unicast messages. Assuming each network on chip link is approximately P millimeters long, its capacitance is

$$C_{link} = P \cdot C_0 \cdot \qquad (4)$$

Using equation (1), the time required for a link driver to transmit a single bit is

$$T_{link} = \frac{\tau}{C_{ld}} (C_{link} + C_{in}) + \tau \ , \qquad (5)$$

where $C_{in}$ is the input capacitance in the input port to which the link is connected.

Since a broadcast message has to travel at least $\sqrt{n}$ modules away from the source, the minimal time to complete the broadcast (neglecting delay within the router) is

$$T_{net} = \sqrt{n} \cdot T_{link} = \sqrt{n}\left(\frac{\tau}{C_{ld}}(C_{link} + C_{in}) + \tau\right)$$
$$= \sqrt{n}\left(\frac{\tau(P \cdot C_0 + C_{in})}{C_{ld}} + \tau\right) \tag{6}$$

Note that equation (6) underestimates the broadcast latency, as messages are withheld at least one clock cycle in each router along their path. In addition, if no priority is given to such packets, they might also be delayed due to network congestion.

In order to calculate the total energy needed for network on chip broadcast, we should first determine the number of times a packet is transmitted. Note that in a regular mesh, a source node may have at most 8 modules at a distance of one, 16 modules two hops away, 24 modules three hops away and so on. In the energy-wise best case, the broadcasting module is located exactly in the middle of the mesh. The broadcasting module therefore has to send 8 messages that would each travel a single link each, 16 messages that travel two links, and in general, 8j messages to a distance of j hops, until transmitting a total of n-1 messages. It can be easily shown that if $\sqrt{n}$ is an integral, odd number, then the Manhattan distance between the module in the middle of the mesh and the ones in its perimeter is exactly -

$$D_{max} = \frac{\sqrt{n} - 1}{2} \tag{7}$$

Since a message transmitted to a destination j hops away has to traverse j links, the minimal number of transmissions required to complete the broadcast is

$$K = 8 \cdot 1 + 16 \cdot 2 + 24 \cdot 3 + \dots + 8D_{max} \cdot D_{max}$$
$$= 8 \sum_{j=0}^{D_{max}} j^2 = 8 \frac{D_{max}(D_{max} + 1)(2D_{max} + 1)}{6} \tag{8}$$
$$= \frac{16D_{max}^3 + 24D_{max}^2 + 8D_{max}}{6}$$

Consequently, the lower bound of the total energy consumed by a single broadcast operation according to (3) is

$$E_{net} = \Delta V^2 \cdot K(C_{ld} + C_{link} + C_{in}) \tag{9}$$

Similarly, the latency and energy that characterize a broadcast on a bus are evaluated. It is assumed that bus 100 is composed of $\sqrt{n}$ horizontal sections (of length $\sqrt{n} \cdot P$ each), connected together using a vertical segment of the same length. As the total bus length is approximately $\left(\sqrt{n} + n\right)P$ long, and assuming that it is connected to n loads of $C_{in}$ each, its total capacity is approximately

$$C_{bus} \square \left(\sqrt{n} + n\right)PC_0 + nC_{in} \tag{10}$$

The resulting broadcast transmission delay according to (1) is:

$$T_{bus} = \frac{\tau}{C_{bd}} C_{bus} + \tau$$

$$= \frac{\tau}{C_{bd}} \left( \left( \sqrt{n} + n \right) PC_0 + nC_{in} \right) + \tau \tag{11}$$

Using equation (3), the total energy required to drive bus 100:

$$E_{bus} = \Delta V^2 (C_{bus} + C_{bd})$$

$$= \Delta V^2 \left( \left( \sqrt{n} + n \right) PC_0 + nC_{in} + C_{bd} \right) \tag{12}$$

Clearly, the bus driver should be much more powerful (and energy consuming) than a link driver. In order to choose an appropriate sizing for the bus driver, it is required that:

$$\frac{T_{net}}{T_{bus}} = \beta \tag{13}$$

where $\beta$ is a parameter reflecting the network-to- bus broadcast speed ratio.
Using equations (6), (11) and (13), the following is obtained:

$$\frac{\tau}{C_{bd}} \left( \left( \sqrt{n} + n \right) PC_0 + nC_{in} \right) + \tau$$

$$= \frac{\sqrt{n}}{\beta} \left( \frac{\tau (P \cdot C_0 + C_{in})}{C_{ld}} + \tau \right) \tag{14}$$

And therefore, for achieving a desired speed ratio $\beta$ the bus driver should have an input capacitance of

$$C_{bd} = \frac{\tau \left( \sqrt{n} PC_0 + nPC_0 + nC_{in} \right)}{\frac{\sqrt{n}}{\beta} \left( \frac{\tau (P \cdot C_0 + C_{in})}{C_{ld}} + \tau \right) - \tau} \tag{15}$$

Using equation (12), the total energy consumption required for a bus broadcast is:

$$E_{bus} = \Delta V^2 \left( \left( \sqrt{n} + n \right) PC_0 + nC_{in} \right)$$

$$+ \Delta V^2 \left( \frac{\tau \left( \sqrt{n} PC_0 + nPC_0 + nC_{in} \right)}{\frac{\sqrt{n}}{\beta} \left( \frac{\tau (P \cdot C_0 + C_{in})}{C_{ld}} + \tau \right) - \tau} \right) \tag{16}$$

In order to complete the analysis, typical values for the various electrical parameters for 0.65um technology are used. The tile size (P) is assumed to be 1mm, and $C_{ld}$ is selected so that the resulting single-wire link bandwidth is 20Mb/sec.

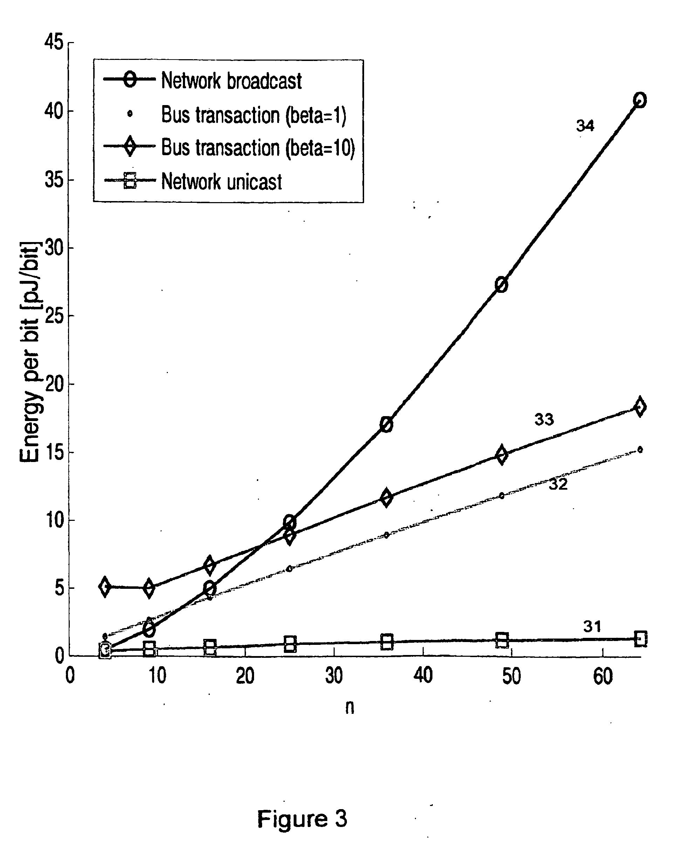

Figure 3 shows the energy required for unicast and broadcast transmissions in a network on chip. It also shows the energy required for a broadcast transmission in BENoC for two bus speeds (values of β).

Curve 34 illustrates the power consumption required for broadcasting over network on chip 10. Curve 33 illustrates the energy consumed for broadcast transmission over bus 100 at beta of 1. Curve 32 illustrates the energy consumed for broadcast transmission over bus 100 at beta of 10. Curve 31 illustrates the energy consumed for unicast transmission over network on chip 10.

As expected, bus 100 is no match for the network on chip 10 when a message should be delivered to a single destination. The energy required for the delivery of a unicast message traveling an average distance in a mesh network on chip is proportional to $\sqrt{n}$ while in bus 100 the energy is approximately linear with respect to the number of modules using reasonable values of the speed ratio beta. Obviously, trying to provide the total network throughput capacity on bus 100 would be extremely wasteful in terms of power. However, when broadcast operations are compared, bus 100 is considerably more energy efficient than the network, as shown by the "network broadcast" curve compared with the "bus transaction" curves, for system size n of -25 or more.

**Experimental Results - speed of operation**

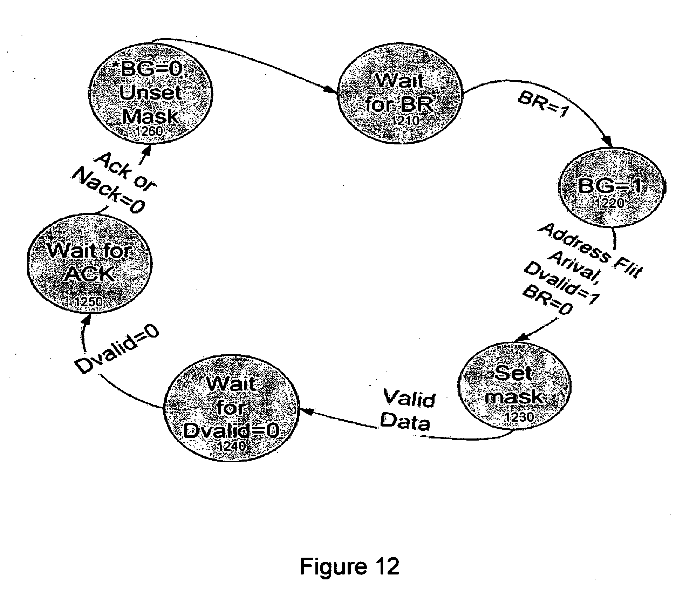

The following is an evaluation of the BENoC and a regular network on chip interconnected for a classical CMP system depicted in Figure 12, supporting dynamic non-uniform cache access architecture which includes eight processors and sixty four distributed cache banks. It is assumed that bus 100 uses centralized arbitration.

The experiments focused on two time-critical operations in a DNUCA system. The first one is the basic line-fill ("read") transaction, which is performed by a processor that tries to read a line into its L1 cache. If an L2 cache has a valid copy of the line, it must provide its content to the reading processor. If the most updated copy resides in a L1 cache of another processor, it is asked to "write back" the line. Else, the line is fetched from a lower memory hierarchy level (L3 cache/memory). When the operation is completed, the processor becomes a "sharer" of the line.

The second operation is the read-for-ownership ("read-exclusive") transaction, which is similar to the basic line-fill operation, but also implies that the reading processor wishes to have the single valid copy of the line as it is about to update its content. In order to complete the transaction, all other L1 copies of the line (held by an owning processor or by sharers) must be invalidated.

A processor performing a read/read exclusive operation does not know the exact state of the requested line. More precisely, the line might be owned by another processor, shared by one or more processors or it may not be present in any of the L2 caches at all. In addition, even if the line is in an L1/L2 cache, the reading processor does not know its location. In a typical DNUCA implementation, the processor has therefore to lookup the line prior to the read/read exclusive operation. In this work, it is assumed a classic model in which each L2 cache line includes some extra bits to keep track of the current sharers/owner of the line.

In order to evaluate the proposed technique, we use two simulators. In order to simulate the BENoC architecture we use Opnet. The model accounts for all network layer modules, including wormhole flow control, virtual channels, routing, finite: router buffers and link capacities. It addition, it simulates the bus arbitration and propagation latencies. The DNUCA system was modeled using the modeling system suggested in Simics which is a well-known parallel execution simulator. Our benchmarks are composed of SPLASH-2 which traces executed on a CMP system. Since we are interested in the parallel sections of the programs, we fast forward through the initial sequential part of each program and measure performance only in the parallel part of the code.

Since the parallel sections of the programs are of interest, performance were measured only in the parallel part of the code.

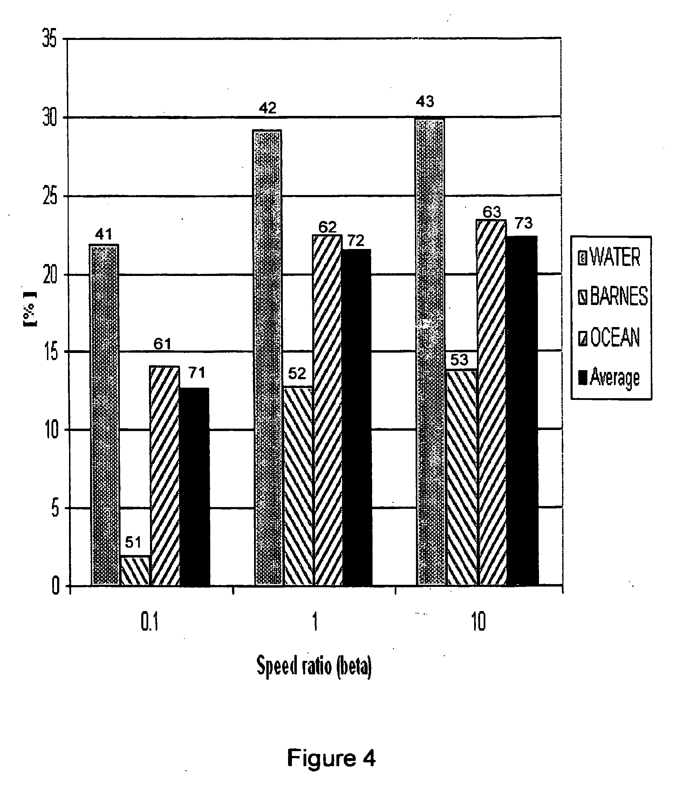

Figure 4 presents the decrease in the line fill transaction time in BENoC relative to the average duration of the same transactions in a standard network on chip system, for various network-to-bus speed ratios (i.e., different values of β).

As expected, BENoC significantly reduces the average transaction time. This is also true for slow busses, which are also very power efficient. It is noted that even when an extremely high latency bus is used, BENoC achieves a significant performance improvement. This results from the fact that in the above analysis a lower bound for network latency was used. In a real network broadcast messages of cores are likely to collide, as they repeatedly compete for the network resources. In addition, even when no collisions occur, routers introduce some additional latency.

Figure 4 illustrates a L2 access time improvement The reduction in the line fill transaction time in benchmark programs, for different network-to-bus speed ratios.

**Design Guidelines and Principles of bus 100**

Since bus 100 serves as a complementary infrastructure for particularly defined uses such as unicast, multicast and broadcast brief control or meta-data transactions, its penalty on various system cost metrics such as area, power and complexity has to be reduced to the possible minimum. Therefore, conventional system busses such as AMBA or Core Connect are not appropriate and a new architecture has to be proposed.

Conveniently, bus 100 has a low bandwidth as high bandwidth traffic is conveyed over the network on chip 10. Bus 100 should convey low bandwidth communication such as control signaling and meta-data transfers. High bandwidth transactions are performed through the network. Thus, bus 100 can manage without segmentation, spatial reuse, pipelining and other costly bandwidth boosting mechanisms.

Conveniently, bus 100 has a low predicted latency. It can include a small number of bus stations and, wire and a root that provides a low and predictable latency. For example- the number of bus stations can be defined by the architecture and for balanced tree equals to $D^{(\log_D N-1)}+1$ where D it's the tree degree (2 for binary, 3, 4) and N it's the modules number.

Conveniently, bus 100 is relatively small as it conveys relatively a small amount of traffic.

Conveniently, bus 100 has low power consumption. It can be selectively powered down and it conveys a limited amount of traffic.

**Bus architecture**

Bus 100 has a tree topology. The tree is not necessarily a binary tree or a balanced tree. It can include a root and multiple bus stations that are located in tree junctions.

Figure 5 illustrates bus 100 according to an embodiment of the invention. Bus 100 includes root 110 and multiple leafs. Root 110 is connected to bus stations 131 and 141. Bus station 131 is connected to bus station 132 and module 201. Bus station 132 is connected to modules 202 and 203. Bus station 141 is connected to bus stations 142 and 143. Bus station 142 is connected to modules 204 and 205. Bus station 143 is connected to modules 206, 207, 208 and 209.

Root 110 is a sequential unit that possesses the ability to intercept destination address, and masters the later described partial masking mechanism. Bus stations 131, 132, 141, 142 and 143 are pseudo combinatorial units that are responsible of aligning data switches between transactions and playing their role in the distributed arbitration mechanism.

Each module out of modules 201 - 209 can, at any given point in time, transmit data or receive data through bus 100. Conveniently, only one transmitter can transmit at a time. As it will be described later, bus 100 supports highly power efficient unicast, multicast and broadcast transmissions.

Bus access is regulated with the well known Bus Request (BR) - Bus Grant (BG) mechanism. Modules that wish to transmit issue a bus request via their BR pin. After the current transaction ends, one of the requesting modules is given the permission to transmit with the help of the BG signal. At the first stage of a transaction a combinatorial path between the transmitting module and the receiving module is built up. Data and bus control signals are synchronized to bus clock that is connected only to the root and the modules in the leaves of the tree.

Bus 100 applies a distributed arbitration mechanism. The BR/BG interface is found not only between bus 100 and modules 201- 209 but between all bus units including modules 201-209, bus stations 131, 132, 141, 142 and 143 and root 110. Each bus station can arbitrate between bus requests and send a bus request upwards. According to another embodiment of the invention the bus station does not arbitrate between requests but issues a bus request towards the root (upwards) if one of its sons issues a request. Root 110 eventually decides which bus request to grant and this bus grant is sent via the bus stations to a selected module.

A bus station that receives a bus grant (BG) will pass the BG to one of its sons according to its arbitration logic so that only one module receives the BG. The suggested mechanism permits local and modular arbitration priority adjustments by altering the specific bus stations arbitration logics or with the means of tree topology manipulation.

The data from the transmitter (module) to the receivers (modules) moves upstream towards root 110 and than is transmitted downstream across the tree or at least via selected bus stations. The combinatorial route between the data sending module and the root is established during the bus grant penetration down to the transmitter. Bus stations can be prevented (by masking) from sending information (for example- by being shut down) towards irrelevant bus stations or modules.

Bus 100 can apply a masking mechanism. The role of the masking mechanism is to save power by preventing the data from spreading across the whole tree in unicast or multicast transactions. The mask logic is located in the root and controls data penetration through the bus stations with a designated line to every bus station down to the lowest masking level.

Figure 6 illustrates bus 100 and a masking operation according to an embodiment of the invention.

It is assumed that module 201 wishes to transmit information to modules 204. In this case the information should travel from module 201 and bus station 131 to root 110 and from root 110 to bus stations 141 and 142 till it reaches module 204. In this case base stations 132 and 143 can prevent that information from being transmitted to modules 202, 203 and 206-209, as illustrated by dashed lines. Thus, base stations 132 and 143 perform a masking operation. Accordingly, bus stations 132 and 143 can be shut down. Root can send masking commands to bus stations 132 and 143. All bus stations monitor their mask lines and if they convey mask commands from root 110 they do not transmit information.

Conveniently, the data and address busses of bus 100 are unified - this can save die area and cost.

The number of address bits can be reduced if only a portion of all possible multicasts are allowed. A group of allowable multicast can be defined and the selection between one allowable multicast to the other can be made by using a multicast indicator. One of the allowable multicasts should be broadcast.

**Acknowledgement -** Bus 100 supports two acknowledge signals - (a) bus acknowledgement signal (Ack) indicative that at least one destination module is expected to transmit through the network on chip a response to a source module, and (b) a no-acknowledgement signal (Nack) indicative that no response is expected to be sent through the network on chip. Each of these acknowledgement signals can be generated by a source and bus stations as well as the root can aggregate these signals. It is noted that bus stations generate acknowledgement signals only if they are masked, and thus their influence on global Ack and Nack is prevented.

These acknowledgement signals can be active high and can be aggregated (joined up) with AND gates in the bus stations and form a global Ack and a global Nack signals that are generated in the root. Bus 100 acts as a fast, predicted, low-bandwidth metadata transmission medium aside a high bandwidth network on chip. Many of the transmissions through bus 100 require a recipient's response through the network on chip.

Ack and Nack might be used to distinguish between an acknowledgement after which the transmitter is supposed to receive a response through the network on chip (Ack) and an acknowledgement that just ends the transaction (Nack).

Root 110 sets bus 100 free for the next transaction by de-asserting bus grant after it receives a global Ack or Nack. A module that signals Nack, also signals Ack. Global Nack can occur only if all the recipients responded Nack. Sender distinguishes between Ack and Nack by sensing bus grand de-assertion on Nack dedicated clock cycles after it finished up sending it's data packet (every 4 clocks for example). A trick of this kind should be done since there is no acknowledgement path between the root and the sender.

**Bus Station**

Bus stations such as bus stations 131, 132, 141, 142 and 143 are located at the tree junctions and are responsible for local arbitration, data switching, acknowledgement forwarding upward to the root and data masking down to the destinations.

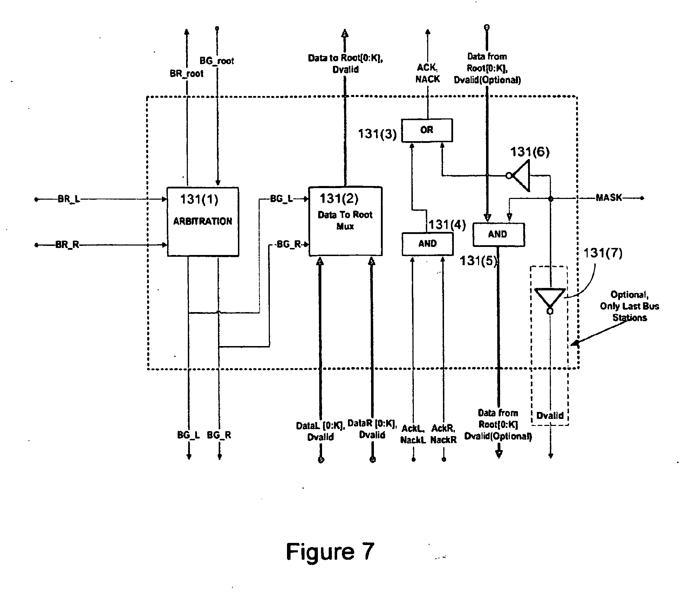

Figure 7 illustrates bus station 131 according to an embodiment of the invention.

Bus station 131 is a binary bus station but other bus stations can include more than two inputs. Bus station 131 receives the following signals: BR_L, BR_R, DataL[1:K], DataR[1:K], Dvalid L, Dvalid R, AckL, AckR, NackL, NackR, MASK, and outputs the following signals: BG_L, BG_R, Data to Root [1:K], Dvalid, Ack and Nack, Dvalid R, MASK.

BR_R and BR_L are bus request lines from right and left sons (for example - from module 201 and bus station 132) respectively. Similarly BG_R and BG_L are bus grant to right and left sons. Acks and Nacks are positive and negative acknowledgement lines, DataL[1:K] and DataR[1:K] are K data lines from sons to the direction of the root, Dvalid to the root it is the sender data valid bit. Dvalid from the root it's an optional data valid bit to the receiver. MASK it is a masking signal that masks the data on its way down, ties the acknowledgement outputs high at the same time, and optionally acts as a data valid bit to the receiver in last tree level bus stations.

Bus station 131 includes arbitration circuit 800 data to root multiplexer ('data to root mux') 131 (2), AND gates 131 (4) and 131 (5), OR gate 131(3) and inverters 131(6) and 131(7).

Bus requests BR_L and BR_R are joint up with an OR gate within arbitration circuit 800. Arbitration circuit 800 can determine which requestor (son) shall receive a bas grant- if such was approved by root 110. According to this arbitration result data to root multiplexer sends data towards root 110- the information sent by the selected son. AND gate 131 (4) receives signals AckL and AckR to provide ACK. AND gate 131 (4) also receives signals NackL and NackR and provides NACK. AND gate 131(5) performs a masking operation on the data from root (applying an AND operation on MASK and that data) to selectively mask the information that can be sent towards the sons of bus station 131. Inverter 131(7) inverts MASK signal to output Dvalid signal. This inverter is included only at the last bus stations.

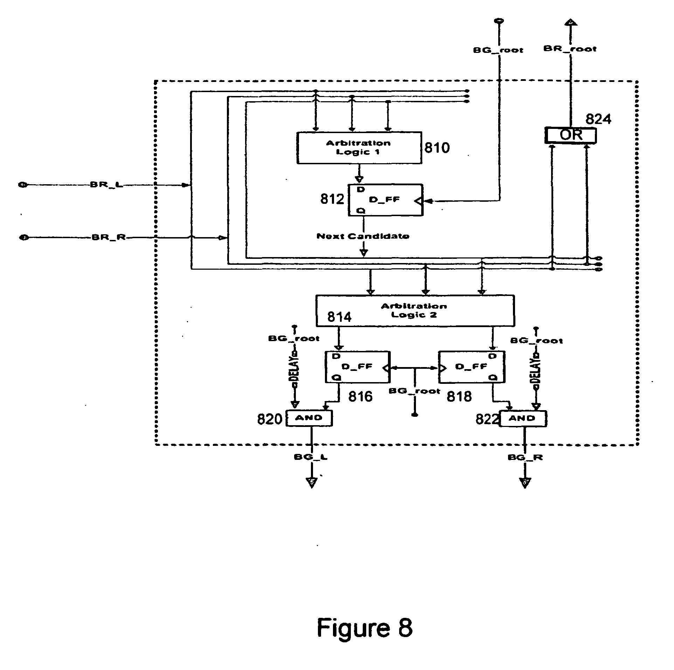

Figure 8 illustrates arbitration circuit 800 according to an embodiment of the invention.

Arbitration circuit 800 includes arbitration logics 810 and 814, sequential circuits 812, 816 and 818, AND gates 820 and 822 and OR gate 824.

BG_root is the clock signal provided to sequential circuits 812, 816 and 818. BR_L and BR_L are the inputs to arbitration logics 810 and 814. The outputs of arbitration circuit 800 are BR_root, BG_L and BG_R. BR_root is a result of applying an OR operation (by OR gate 824) on BR_L and BR_R.

The output of arbitration logic 810 is connected to the input of sequential circuit 812. The output signal of sequential circuit 218 (denoted "next candidate) is provided as input to arbitration logics 810 and 814. One output of arbitration circuit 814 is connected to the input of sequential circuit 818 while another output of arbitration logic 814 is connected to sequential circuit 816. A delayed version of BG_root is provided to AND gates 820 and 822. An output of sequential circuit 816 is connected to an input of AND gate 820. An output of sequential circuit 818 is connected to an input of AND gate 822.

Arbitration circuit 800 receives as inputs bus requests (BR_L and BR_R in this case) from the sons (module 201 and bus station 132) and bus grant (BG_root) from the upper level (root 110). The outputs are bus grants to the sons (BG_L and BG_R) and bus request to the upper level (BR_root).

Arbitration circuit 800 has three sequential units 812, 816 and 818 that are clocked with the bus grant input from the upper stage in the tree. The first sequential unit (81 w) stores the next candidate for grant on the basis of bus request inputs and the last "next candidate". Second sequential units 816 and 818 register the BG outputs after they are calculated considered next grant candidate and bus requests. The outputs are AND'ed with BG_root in order to initiate a clock rise in every bus grant transaction beginning. A delay line (denoted "DELAY") is required between the BG_root and the inputs to the last AND gates in order to compensate $T_{pd}$ of the last registers, and thus avoid disastrous clock hazards to the next arbitration units. The arbitration logic implements a round robin or other user defined algorithm in a case of multiple simultaneous bus requests. Priority biasing manipulations are possible with internal arbitration logic adjustments and topological modules placement. Multiple ports blocks are designed with the same principles.

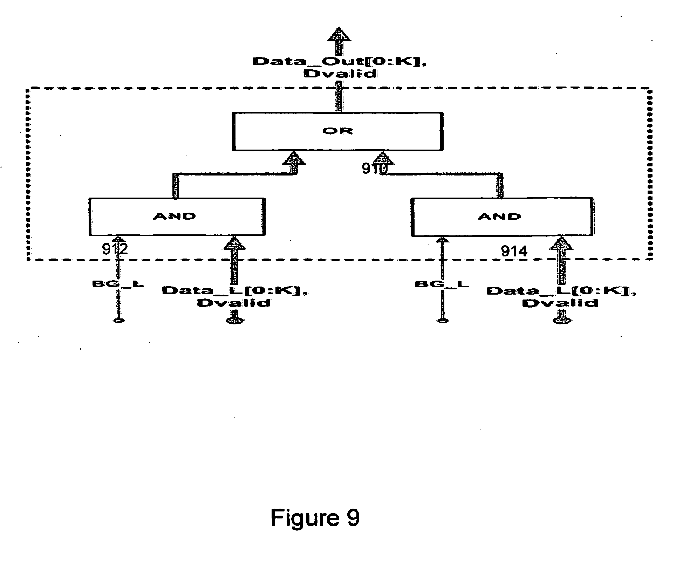

As stated earlier, with bus grant penetration down the tree, a combinatorial data path up to the root is build up with the help of the "data to root" multiplexers that are controlled by BG lines. Figure 9 presents a scheme of a dual port data switch according to an embodiment of the invention.

Referring to figure 7, acknowledge signals (Ack and Nack) from the sons are AND'ed together and OR'ed with the mask signal. Bus station gives acknowledgement upwards in two cases - if it received acknowledgement from all its sons or if it is masked. A masked segment of the tree signals acknowledge back so it will not accidentally hold bus 100 in an acknowledgement wait state.

Data that is coming from the root is AND'ed with the mask signal (masking mechanism implementation). In the bus station of the lowest masking level mask signal is also optionally used as data valid signal to the receiving modules.

**The Root**

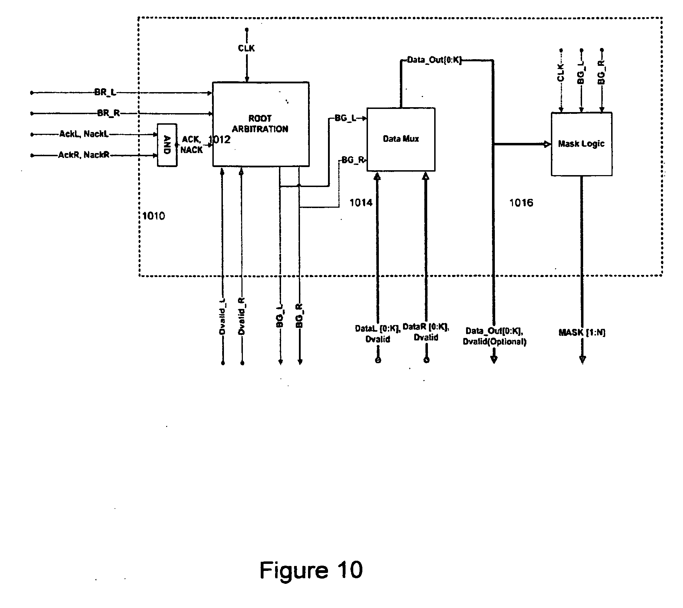

Root 110 acts as the global control center of bus 100. It implements the whole bus state machine, controls global bus-grant state, intercepts addresses, monitors the mask lines and gets global acknowledgements. The root it is the only section of bus 100 that is clocked with the system clock. Modules bus interfaces are working with the same clock. A block structure of a root with two sons is found in figure 10.

Figure 10 illustrates root 110 according to an embodiment of the invention.

Root 110 includes root arbitration circuit 1012, data multiplexer 1014 and mask logic 1016.

Not like the arbitration in bus stations, root arbitration unit 1012 has the authority to initialize a new transaction by issuing a BG signal to one of the root's sons. Root 110 has this capability since it is the only unit that has the sense of global acknowledgement signals, the current bus grant state and the state of the previous transaction. Dvalid lines are active high signals that are bubbling upwards from the modules with the data and marking whether there is valid data transmitted. The lines are utilized to point out end of transmit. If area cost considerations overcome bandwidth requirements, an extra clock cycle with "transmit end" word might be used instead. On the other hand, Dvalid signal can be routed all the way back down to the modules, allowing this way to disable the masking mechanism that was also responsible to signal valid data to the recipients, and correspondingly save masking power if broadcast or large sets multicast transactions occur often. As implied earlier, root's arbitration block is responsible for bus grant de-assertion and its timing if two types of acknowledgement (Ack and Nack) are used - this mechanism is treated widely in the next section. The mechanism saves the need for a logic acknowledgement path between the root and the sender.

Data multiplexer 1014 can be similar to data multiplexers in the bus stations.

Mask logic 1016 determines, based upon the address (and especially multicast indicator) which bus stations should be masked. It drives N mask lines that are routed to N different bus-stations and responsible of blocking data penetration toward modules that are not intended to receive data in the specific transaction.

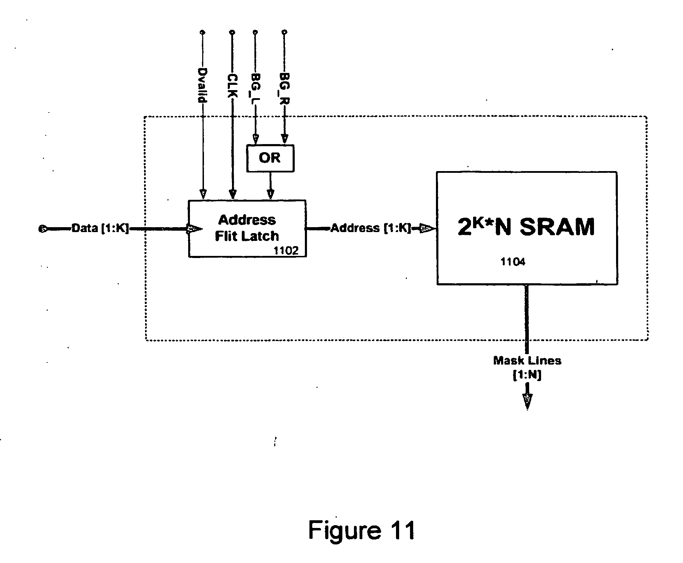

Figure 11 illustrates mask logic 1016 according to an embodiment of the invention. Mask logic 1016 includes address latch 1102 and a $2^K$ entry memory unit (denoted $2^K*N$ SRAM array) 1104. $2^K$ it's the number of allowable addresses including multicast identifiers and unicast addresses that can be identified by a K long multicast identifier. Each entry indicates which bus station to mask per mask identifier.

Address flit latch holds the destination address that is transmitted at the first clock after bus grant was assigned to the current transmitter. The address is held until bus grant is de-asserted. After bus grant de-assertion the latch's output holds the "all masked" address unless masking mechanism is disabled. Root's state machine will be discussed widely in the next section.

**Bus State Machine and Communication Protocol**

Bus 100 can be synchronous in its topological edges. Root 110 can apply a state machine, as illustrated in figure 12.

Figure 12 illustrates a state machine that includes six states 1210, 1220, 1230, 1240, 1250 and 1260 according to an embodiment of the invention. The initial state is state 120 "Wait for BR" state 1210, where BR stands for Bus Request. As soon as one of the modules in the leaves issues a bus request (for example - by setting its BR high), one of root's BR inputs goes high. If only one of root's BR inputs is high, root arbitration unit issues a BG (Bus Grant) to the son that requests bus 100, as illustrated by stage 1220 "BG=1". If two or more sons request bus 100, the unit gives grant (as illustrated by state "BG=1" 1220) the son on queue according to a round robin principle (arbitration bias can be implemented by altering arbitration logic here or in the bus stations).

Once bus grant issued, root 110 waits for the first data word from the transmitter. This word includes the address of the receiver, a serial number of a multicast set, or a broadcast address. After the arrival of the first word, the address is latched in the address flit latch and mask lines are updated accordingly- as indicated by state 1230 "set mask". It is noted that stage 1220 is also followed by resetting BR (BR=0). A module that sends a first word resets BR. Following the masking data root 110 waits till the transmitter indicates that it does not have any more valid information to transit- for example by resetting Dvalid (this wait state is indicated by state 1240 of "wait for Dvalid=0").

Once this occurs root 110 de-asserts the mask by masking all bus 100 again and waits for Ack or Nack (as indicated by stage 1250 "wait for ACK") in order to pass again to BR wait state.

As resembled earlier, Ack and Nack are distinguished by the timing of setting BG to "0" after Dvalid de-assertion. This is illustrated by stage 1260. Stage 1260 includes resetting BG and unsetting the mask. Stage 1260 is denoted "BG=0, Unset mask". Stage 1260 is followed by stage 1210.

If Nack is issued (which means that all the recipients replied that there will not be any response to the issued request by the sender through the network on chip) BG will go down only after a predetermined period- for example - at the Xth clock after Dvalid went down by the sender. Although it might cause loosing clock cycles, this trick avoids the need for a much longer timeout for waiting answers from the network on chip.

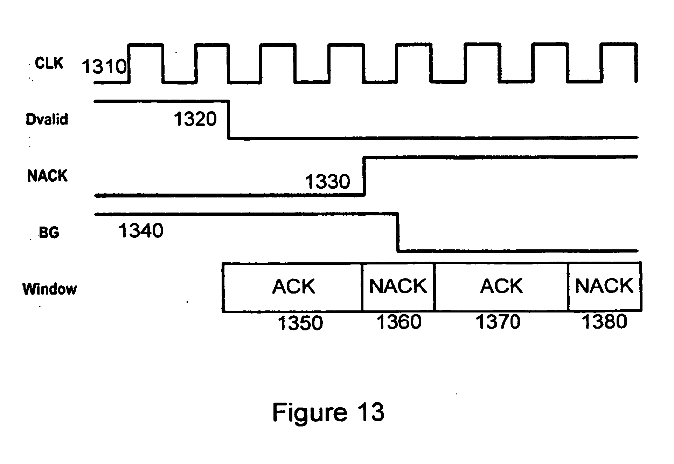

Figure 13 is a timing diagram according to an embodiment of the invention. It illustrates a time division multiplex between ACK and NACK.

Figure 13 illustrates signals CLK 1310, Davlid 1320, NACK 1330 and BG 1340 as well as various windows allocated for ACK (1350 and 1370) and NACK (1360 and 1380).

If BG 1340 is de-asserted during an ACK window the sender gets Ack. If BG goes low in NACK window (such as 1360), the sender intercepts it as a Nack.

Table 1 illustrates the signals exchanges during a transmission of information from module 201 and module 206.

Table 1 - Transaction Example

| CLK | ROOT | Module 201 | Module 206 |
|---|---|---|---|
| Clk- | | BR=1 | |
| Clk+ | BG=1 | BG=1 | |
| Clk- | | Dvalid=1, Word(0) - Address BR3=0 | |
| Clk+ | Mask+ | | |
| Clk- | | Word(1) | Word(0) |
| Clk- | | Word(2), Dvalid=0 | Word(1) |
| Clk- | | | Word(2), Dvalid=0 |
| Clk- | | | Ack=1 |
| Clk+ | Ack=1, BG=0 | | |
| Clk+ | Mask- | | Ack=0 |

Table 1 illustrates that five and a half clock cycles are needed in order to transmit two words. Since a transaction starts with clock fall edge, in following transactions there will be needed (4 + number of data words clock cycles) per transaction.

In the presented protocol there is a whole clock cycle (from clk-to clk-) dedicated for each data word and half clock cycle for bus request, bus grant and masking processes. For systems where the combinatorial path delay between modules (that goes through the root) is not critical it might me considered to dedicate only a half clock cycle for data transmission.

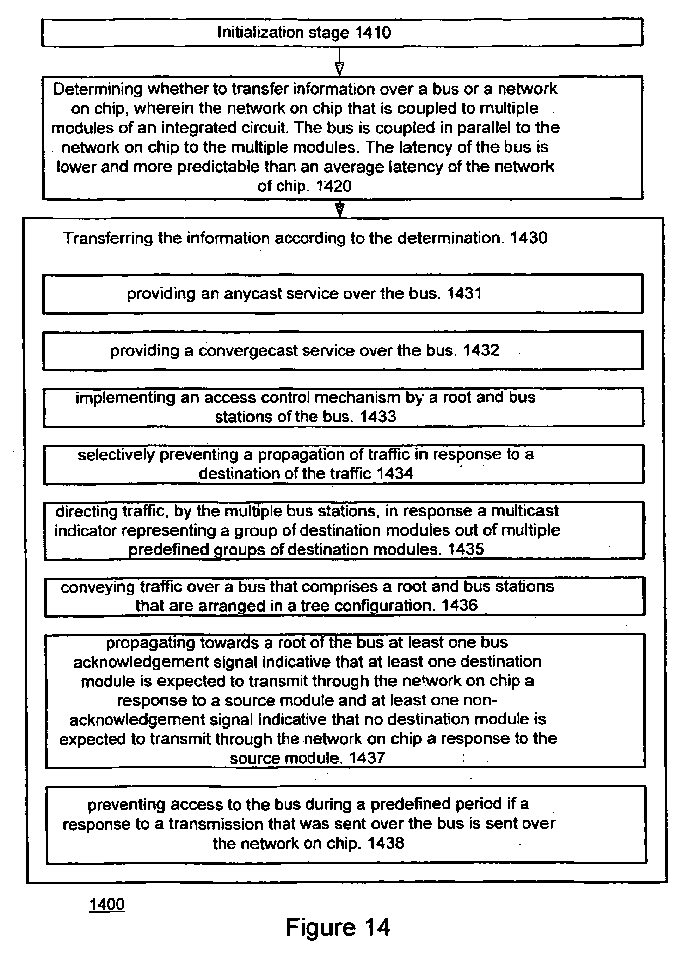

Figure 14 illustrates a method 1400 for transferring information within an integrated circuit according to an embodiment of the invention.

Method 1400 can be executed by any of the mentioned above systems.

Method 1400 starts by initialization stage 1410. This stage can include determining transmission rules that determine when to transmit information over a network on chip and when to transmit the information over a bus. For example - information can be broadcast over the bus while unicast transmission should be made over the network on chip. Fast transmission of control signals should occur over bus. High throughput transmission of data should occur over network on chip.

Stage 1410 can also include determining which the allowable multicasts are and allocating a multicast indicator per allowable multicast.

Stage 1410 can include receiving allowable multicast information and, additionally or alternatively, receiving transmission rules.

Stage 1410 can also include distributing transmission rules and/or allowable multicast information to modules and to the bus.

Stage 1410 is followed by stage 1420 of determining whether to transfer information over a bus or a network on chip, wherein the network on chip that is coupled to multiple modules of an integrated circuit. The bus is coupled in parallel to the network on chip to the multiple modules. The latency of the bus is lower and more predictable than an average latency of the network of chip. The determination is responsive to transmission rules.

Conveniently, the throughput of the network on chip is higher than a throughput of the bus.

Stage 1420 is followed by stage 1430 of transferring the information according to the determination.

Broadcast transactions can be made over the bus. Accordingly, stage 1420 can include determining to perform a broadcast transmission over the bus and stage 1430 includes transferring the information to all of the modules over the bus.

Point to point transactions (unicast) can be made over the network on chip. Accordingly, stage 1420 can include determining to unicast information over the network on chip and stage 1430 includes unicasting the information over the network on chip.

Stage 1430 can involve providing multicast, broadcast or unicast transactions over the bus.

Stage 1430 can include at least one stage out of stages 1431-1438.

Stage 1431 of providing an anycast service over the bus. This can include broadcasting a query to multiple (even all) modules - wherein the query is aimed to modules that have a certain capability (or have an available resource) and providing a response from one or more modules.

Stage 1432 of providing a convergecast service over the bus. This includes merging control signals from modules and/or bus modules to provide merged signals to a higher level bus entity such as a root.

Stage 1433 of implementing an access control mechanism by a root and bus stations of the bus. The access control mechanism can be centralized, distributed or a combination thereof. For example, root 110 and bus stations (such as 141, 142, 141, 142 and 143) can implement a distributed access control scheme in which bus stations as well as the root can arbitrate between bus requests.

Stage 1434 of selectively preventing a propagation of traffic in response to a destination of the traffic. This feature was referred to as masking.

Stage 1435 of directing traffic, by the multiple bus stations, in response a multicast indicator representing a group of destination modules out of multiple predefined groups of destination modules.

Stage 1436 of conveying traffic over a bus that comprises a root and bus stations that are arranged in a tree configuration.

Stage 1437 of propagating towards a root of the bus at least one bus acknowledgement signal indicative that at least one destination module is expected to transmit through the network on chip a response to a source module and at least one non-acknowledgement signal indicative that no destination module is expected to transmit through the network on chip a response to the source module.

Stage 1438 of preventing access to the bus during a predefined period if a response to a transmission that was sent over the bus is sent over the network on chip. For example the access can be prevented by releasing the bus only after X clock cycles after Nack was received.

Furthermore, those skilled in the art will recognize that boundaries between the functionality of the above described operations merely illustrative. The functionality of multiple operations may be combined into a single operation, and/or the functionality of a single operation may be distributed in additional operations. Moreover, alternative embodiments may include multiple instances of a particular operation, and the order of operations may be altered in various other embodiments.

Thus, it is to be understood that the architectures depicted herein are merely exemplary, and that in fact many other architectures can be implemented which achieve the same functionality. In an abstract, but still definite sense, any arrangement of modules to achieve the same functionality is effectively "associated" such that the desired functionality is achieved. Hence, any two modules herein combined to achieve a particular functionality can be seen as "associated with" each other such that the desired functionality is achieved, irrespective of architectures or intermedial modules. Likewise, any two modules so associated can also be viewed as being "operably connected," or "operably coupled," to each other to achieve the desired functionality.

In addition, the invention is not limited to physical devices or units implemented in non-programmable hardware but can also be applied in programmable devices or units able to perform the desired device functions by operating in accordance with suitable program code. Furthermore, the devices may be physically distributed over a number of apparatuses, while functionally operating as a single device.

However, other modifications, variations, and alternatives are also possible. The specifications and drawings are, accordingly, to be regarded in an illustrative rather than in a restrictive sense.

The word 'comprising' does not exclude the presence of other elements or steps then those listed in a claim. Moreover, the terms "front," "back," "top," "bottom," "over," "under" and the like in the description and in the claims, if any, are used for descriptive purposes and not necessarily for describing permanent relative positions. It is understood that the terms so used are interchangeable under appropriate circumstances such that the embodiments of the invention described herein are, for example, capable of operation in other orientations than those illustrated or otherwise described herein.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1.  A system (8) comprising:

    multiple modules (20) of an integrated circuit;
    a network on chip (10) that is coupled to the multiple modules (20); and **characterized by** further comprising
    a bus (100), coupled in parallel to the network on chip (10) to at least two modules (20) of the multiple modules (20), such that the at least two modules (20) communicate with each other via the bus (100) or via the network on chip (20);
    wherein a latency of the bus (100) is lower and more predictable than a latency of the network on chip (10).

2.  The system (8) according to claim 1 wherein a throughput of the network on chip (20) is higher than a throughput of the bus (100).

3.  The system (8) according to any preceding claim wherein the bus (100) conveys broadcast transactions and the network on chip (20) conveys point to point transactions.

4.  The system (8) according to any preceding claim wherein the bus (100) conveys multicast transactions and the network on chip conveys (20) point to point transactions.

5.  The system (8) according to any preceding claim wherein the bus (100) provides an anycast service.

6.  The system (8) according to any one of claims 1 to 4 wherein the bus (100) provides a convergecast service.

7.  The system (8) according to any preceding claim wherein the bus (100) conveys time-critical point to point transactions and the network on chip (20) conveys non time-critical point to point transactions.

8.  The system (8) according to any preceding claim wherein the bus (100) comprises a root (110) and bus stations (131, 132, 141, 142, 143) that apply a media access control mechanism (1443).

9.  The system (8) according to any preceding claim wherein the bus (100) comprises a root (110) and bus stations (131, 132, 141, 142, 143) that apply a distributed media access control mechanism.

**10.** The system (8) according to any preceding claim wherein the bus (100) comprises multiple masking units configured to selectively prevent a propagation of traffic to one or more modules (20) connected to the bus (100).

**11.** The system (8) according to any preceding claim wherein the bus comprises multiple bus stations (131, 132, 141, 142, 143) that are configured to direct traffic according to a multicast indicator representing a group of destination modules out of multiple predefined groups of destination modules.

**12.** The system (8) according to claim 11 wherein the root (110) and bus stations (131, 132, 141, 142, 143) are arranged in a tree configuration.

**13.** The system (8) according to claim 11 or 12 wherein the bus stations (131, 132, 141, 142, 143) propagate towards the root (110) at least one bus acknowledgment signal indicative that a destination component is expected to transmit through the bus (100) a response to a source component and at least one network on chip acknowledgment signal indicative that a destination component is expected to transmit through the network on chip (10) a response to the source component.

**14.** The system (8) according to any one of claims 11 to 13 wherein the bus (100) is configured to prevent access to the bus (100) during a predefined period if a response to a transmission that was sent over the bus (100) is sent over the network on chip (10).

**15.** A method for transferring information within an integrated circuit, the method comprising:

determining whether to transfer information between modules (20) of an integrated circuit over a bus (100) or a network on chip (10); wherein the network on chip (10) and the bus (100) are coupled in parallel to the modules (20), such that the modules (20) communicate with each other via the bus (100) or via the network on chip (20); wherein a latency of the bus (100) is lower and more predictable than a latency of the network of chip (10); and transferring the information according to the determination.

**Patentansprüche**

**1.** System (8), das Folgendes umfasst:

mehrere Module (20) einer integrierten Schaltung;
ein Network-on-Chip (10), das an die mehreren Module (20) gekoppelt ist; und
**dadurch gekennzeichnet, dass** es ferner Folgendes umfasst:

einen Bus (100), der parallel zum Network-on-Chip (10) an mindestens zwei Module (20) der mehreren Module (20) gekoppelt ist, derart, dass die mindestens zwei Module (20) über den Bus (100) oder über das Network-on-Chip (20) miteinander kommunizieren;
wobei eine Latenzzeit des Busses (100) niedriger und voraussagbarer ist als eine Latenzzeit des Network-on-Chip (10).

**2.** System (8) nach Anspruch 1, wobei ein Durchsatz des Network-on-Chip (20) höher ist als ein Durchsatz des Busses (100).

**3.** System (8) nach einem vorhergehenden Anspruch, wobei der Bus (100) Rundsendetransaktionen befördert und das Network-on-Chip (20) Punkt-zu-Punkt-Transaktionen befördert.

**4.** System (8) nach einem vorhergehenden Anspruch, wobei der Bus (100) Multicast-Transaktionen befördert und das Network-on-Chip (20) Punkt-zu-Punkt-Transaktionen befördert.

**5.** System (8) nach einem vorhergehenden Anspruch, wobei der Bus (100) einen Anycast-Dienst bereitstellt.

**6.** System (8) nach einem der Ansprüche 1 bis 4, wobei der Bus (100) einen Convergecast-Dienst bereitstellt.

**7.** System (8) nach einem vorhergehenden Anspruch, wobei der Bus (100) zeitkritische Punkt-zu-Punkt-Transaktionen befördert und das Network-on-Chip (20) nicht zeitkritische Punkt-zu-Punkt-Transaktionen befördert.

8. System (8) nach einem vorhergehenden Anspruch, wobei der Bus (100) eine Root (110) und Bus-Stationen (131, 132, 141, 142, 143) umfasst, die einen Media-Access-Control-Mechanismus (1443) anwenden.

9. System (8) nach einem vorhergehenden Anspruch, wobei der Bus (100) eine Root (110) und Bus-Stationen (131, 132, 141, 142, 143) umfasst, die einen verteilten Media-Access-Control-Mechanismus anwenden.

10. System (8) nach einem vorhergehenden Anspruch, wobei der Bus (100) mehrere Maskierungseinheiten umfasst, die konfiguriert sind, um selektiv eine Ausbreitung von Verkehr an eines oder mehrere Module (20), die mit dem Bus (100) verbunden sind, zu verhindern.

11. System (8) nach einem vorhergehenden Anspruch, wobei der Bus mehrere Bus-Stationen (131, 132, 141, 142, 143) umfasst, die konfiguriert sind, um Verkehr gemäß einem Multicast-Zeiger zu leiten, der eine Gruppe von Zielmodulen von mehreren vordefinierten Gruppen von Zielmodulen darstellt.

12. System (8) nach Anspruch 11, wobei die Root (110) und Bus-Stationen (131, 132, 141, 142, 143) in einer Baumstruktur angeordnet sind.

13. System (8) nach Anspruch 11 oder 12, wobei die Bus-Stationen (131, 132, 141, 142, 143) in Richtung der Root (110) mindestens ein Busbestätigungssignal, das angibt, dass erwartet wird, dass eine Zielkomponente durch den Bus (100) eine Antwort an eine Ursprungskomponente sendet, und mindestens ein Network-on-Chip-Bestätigungssignal verbreitet, das angibt, dass erwartetet wird, dass eine Zielkomponente durch den Network-on-Chip (10) eine Antwort an die Ursprungskomponente sendet.

14. System (8) nach einem der Ansprüche 11 bis 13, wobei der Bus (100) konfiguriert ist, um während eines vordefinierten Zeitraums den Zugriff auf den Bus (100) zu verhindern, wenn eine Antwort auf eine Sendung, die über den Bus (100) gesendet wurde, über das Network-on-Chip (10) gesendet wird.

15. Verfahren zum Übertragen von Informationen innerhalb einer integrierten Schaltung, wobei das Verfahren Folgendes umfasst:

Bestimmen, ob Informationen zwischen Modulen (20) einer integrierten Schaltung über einen Bus (100) oder ein Network-on-Chip (10) zu übertragen sind; wobei das Network-on-Chip (10) und der Bus (100) parallel an die Module (20) gekoppelt sind, derart, dass die Module (20) über den Bus (100) oder über das Network-on-Chip (20) miteinander kommunizieren; wobei eine Latenzzeit des Busses (100) niedriger und voraussagbarer ist als eine Latenzzeit des Network-on-Chip (10); und Übertragen der Informationen gemäß der Bestimmung.

**Revendications**

1. Système (8) comprenant :

de multiples modules (20) d'un circuit intégré ;
un réseau sur puce (10) qui est couplé aux multiples modules (20) ; et
**caractérisé en ce qu'**il comprend en outre un bus (100), couplé en parallèle au réseau sur puce (10) à au moins deux modules (20) parmi les multiples modules (20), de sorte que les au moins deux modules (20) communiquent l'un avec l'autre par l'intermédiaire du bus (100) ou par l'intermédiaire du réseau sur puce (20) ; dans lequel une latence du bus (100) est inférieure à une latence du réseau sur puce (10) et est plus prévisible que celle-ci.

2. Système (8) selon la revendication 1, dans lequel un débit du réseau sur puce (20) est supérieur à un débit du bus (100).

3. Système (8) selon l'une quelconque des revendications précédentes, dans lequel le bus (100) transporte des transactions broadcast et le réseau sur puce (20) transporte des transactions de point à point.

4. Système (8) selon l'une quelconque des revendications précédentes, dans lequel le bus (100) transporte des transactions multicast et le réseau sur puce (20) transporte des transactions de point à point.

**5.** Système (8) selon l'une quelconque des revendications précédentes, dans lequel le bus (100) fournit un service anycast.

**6.** Système (8) selon l'une quelconque des revendications 1 à 4, dans lequel le bus (100) fournit un service convergecast.

**7.** Système (8) selon l'une quelconque des revendications précédentes, dans lequel le bus (100) transporte des transactions de point à point critiques dans le temps et le réseau sur puce (20) transporte des transactions de point à point non critiques dans le temps.

**8.** Système (8) selon l'une quelconque des revendications précédentes, dans lequel le bus (100) comprend une racine (110) et des stations de bus (131, 132, 141, 142, 143) qui appliquent un mécanisme de commande d'accès au support (1443).

**9.** Système (8) selon l'une quelconque des revendications précédentes, dans lequel le bus (100) comprend une racine (110) et des stations de bus (131, 132, 141, 142, 143) qui appliquent un mécanisme de commande d'accès au support réparti.

**10.** Système (8) selon l'une quelconque des revendications précédentes, dans lequel le bus (100) comprend de multiples unités de masquage configurées pour empêcher sélectivement une propagation de trafic à un ou plusieurs modules (20) reliés au bus (100).

**11.** Système (8) selon l'une quelconque des revendications précédentes, dans lequel le bus comprend de multiples stations de bus (131, 132, 141, 142, 143) qui sont configurées pour diriger un trafic en fonction d'un indicateur multicast représentant un groupe de modules de destination parmi de multiples groupes prédéfinis de modules de destination.

**12.** Système (8) selon la revendication 11, dans lequel la racine (110) et les stations de bus (131, 132, 141, 142, 143) sont agencées dans une configuration en arborescence.

**13.** Système (8) selon la revendication 11 ou 12, dans lequel les stations de bus (131, 132, 141, 142, 143) propagent, vers la racine (110) au moins un signal d'accusé de réception de bus indiquant qu'il est prévu qu'un composant de destination transmette, à travers le bus (100), une réponse à un composant de source, et au moins un signal d'accusé de réception de réseau sur puce indiquant qu'il est prévu qu'un composant de destination transmette, à travers le réseau sur puce (10), une réponse au composant de source.

**14.** Système (8) selon l'une quelconque des revendications 11 à 13, dans lequel le bus (100) est configuré pour empêcher tout accès au bus (100) au cours d'une période prédéfinie si une réponse à une transmission qui a été envoyée sur le bus (100) est envoyée sur le réseau sur puce (10).

**15.** Procédé de transfert d'informations à l'intérieur d'un circuit intégré, le procédé comprenant :

la détermination du fait qu'il faille transférer des informations entre des modules (20) d'un circuit intégré sur un bus (100) ou sur un réseau sur puce (10) ; dans lequel le réseau sur puce (10) et le bus (100) sont couplés en parallèle aux modules (20), de sorte que les modules (20) communiquent l'un avec l'autre par l'intermédiaire du bus (100) ou par l'intermédiaire du réseau sur puce (20) ; dans lequel une latence du bus (100) est inférieure à une latence du réseau sur puce (10) et est plus prévisible que celle-ci ; et
le transfert des informations en fonction de la détermination.

Figure 1

EP 2 227 749 B1

Figure 2

Figure 3

Figure 4

Figure 5

Figure 6

Figure 7

Figure 8

**Figure 9**

Figure 10

Figure 11

Figure 12

Figure 13

Initialization stage 1410

Determining whether to transfer information over a bus or a network on chip, wherein the network on chip that is coupled to multiple modules of an integrated circuit. The bus is coupled in parallel to the network on chip to the multiple modules. The latency of the bus is lower and more predictable than an average latency of the network of chip. 1420

Transferring the information according to the determination. 1430

providing an anycast service over the bus. 1431

providing a convergecast service over the bus. 1432

implementing an access control mechanism by a root and bus stations of the bus. 1433

selectively preventing a propagation of traffic in response to a destination of the traffic 1434

directing traffic, by the multiple bus stations, in response a multicast indicator representing a group of destination modules out of multiple predefined groups of destination modules. 1435

conveying traffic over a bus that comprises a root and bus stations that are arranged in a tree configuration. 1436

propagating towards a root of the bus at least one bus acknowledgement signal indicative that at least one destination module is expected to transmit through the network on chip a response to a source module and at least one non-acknowledgement signal indicative that no destination module is expected to transmit through the network on chip a response to the source module. 1437

preventing access to the bus during a predefined period if a response to a transmission that was sent over the bus is sent over the network on chip. 1438

1400

Figure 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006239392 A

**Non-patent literature cited in the description**

- **RADULESCU A ; GOOSSENS K.** COMMUNICATION SERVICES FOR NETWORKS ON CHIP. *PROCEEDINGS OF THE INTERNATIONAL WORKSHOP ON SYSTEMS, ARCHITECTURES, MODELING AND SIMULATION in SAMOS discusses networks on chip and on-chip buses,* 2002